# EUROPÄISCHE PATENTSCHRIFT

(11) **EP 3 013 122 B1**
(45) Veröffentlichungstag und Bekanntmachung des Hinweises auf die Patenterteilung: **23.10.2019**
(21) Anmeldenummer: 15182107.1
(22) Anmeldetag: 24.08.2015
(51) Int. Cl.: H05B 33/08

(54) **VERFAHREN UND SCHALTUNGSANORDNUNG ZUM SPEISEN EINER SERIENSCHALTUNG VON N LED-EINHEITEN**
METHOD AND CIRCUIT ASSEMBLY FOR SUPPLYING A SERIES CONNECTION OF N LED UNITS WITH POWER
PROCEDE ET AGENCEMENT DE CIRCUIT DESTINE A ALIMENTER UN CIRCUIT EN SERIE DE N UNITES A DEL

(30) Priorität: 22.09.2014 AT 506702014
(43) Veröffentlichungstag der Anmeldung: 27.04.2016
(73) Patentinhaber: ZKW Group GmbH, 3250 Wieselburg (AT)
(72) Erfinder: Baker, Julian, 3240 Mank (AT); Biesenberger, Martin, 3680 Persenbeug (AT); Miedler, Stefan, 3105 Unterradlberg (AT)
(74) Vertreter: Patentanwaltskanzlei Matschnig & Forsthuber OG

(56) Entgegenhaltungen:
- WO-A1-2010/013177
- WO-A1-2013/110052
- WO-A2-2009/157763
- US-A1- 2010 109 570
- US-A1- 2011 227 484
- US-A1- 2013 002 141
- US-A1- 2014 035 473

## Beschreibung

Die Erfindung bezieht sich auf Verfahren zum Speisen einer Serienschaltung von n LED-Einheiten und einer gesteuerten Stromquelle aus einer Spannungsquelle mit schwankender Betriebsspannung, bei welchem je nach Höhe der Betriebsspannung einzelne LED-Einheiten kurzgeschlossen werden.

Weiters bezieht sich die Erfindung auf eine Schaltungsanordnung zum Speisen einer Serienschaltung von n LED-Einheiten und einer gesteuerten Stromquelle und mit einer Spannungsquelle mit schwankender Betriebsspannung, wobei die Serienschaltung der LED-Einheiten und der Stromquelle an die Spannungsquelle angeschlossen ist, und mit einer Steuereinheit zum Ansteuern der Stromquelle und einer den LED-Einheiten zugeordneten Schalteranordnung mit gesteuerten Schaltern
Unter LED-Einheit ist im Rahmen der Erfindung sowohl eine einzelne Leuchtdiode (LED) zu verstehen, als auch eine Einheit, die aus mehreren, parallel und/oder in Serie geschalteten LEDs besteht.

Aus der WO 2010/013177A1 geht beispielsweise eine Schaltmatrix hervor, welcher LED-Gruppen oder einzelne LEDs zugeordnet sind, und die an eine Spannungsquelle sowie an eine steuerbare Stromquelle angeschlossen ist. Es ist weiters eine Steuereinheit vorgesehen, welche die einzelnen Schalter der Schaltmatrix sowie die Stromquelle ansteuern kann, und die zum Vergleich der Spannung der Spannungsquelle mit in einem Speicher abgelegten Spannungsschwellen eingerichtet ist. Um eine zufriedenstellende Speisung der LEDs auch bei starken Schwankungen der Spannungsquelle sicherzustellen, ist die Steuereinheit dazu eingerichtet, je nach Höhe der an der Spannungsquelle festgestellten Spannung sämtliche oder einen Teil der LEDs in Serie oder Parallel zu schalten, wobei de facto alle denkbaren Kombinationen von Serien/Parallelschaltungen möglich sind. Die aufgezeigte Lösung erfordert einerseits je LED drei gesteuerte Schalter und eine entsprechend aufwändige Ansteuerlogik, vor allem aber besteht der Nachteil, dass im Falle einer Betriebsspannungsschwankung keine gleichmäßige Helligkeit der eingesetzten LEDs gewährleistet ist, vielmehr auch eine oder mehrere LEDs überhaupt dunkel bleiben.

Das Dokument WO 2009/157763 A2 offenbart eine Steuereinrichtung zur Ansteuerung einzelner LEDs einer LED-Serienschaltung, die von einem Netzgerät beispielsweise mit konstantem Strom versorgt wird, wobei die einzelnen LEDs überbrückende Schalter angesteuert werden, um die LEDs sequentiell zu takten, wobei auch das Tastverhältnis geändert werden kann. Auf diese Weise soll die Helligkeit oder der Farbeindruck gemäß einer Vorgabe an die Steuereinrichtung so geändert werden, dass bei diesem Dimmen keine für das menschliche Auge als unangenehm empfundene Helligkeitsänderungen durch den Ansteuertakt auftreten. Das Problem von Spannungsschwankungen der Betriebsspannung wird in diesem Dokument nicht thematisiert.

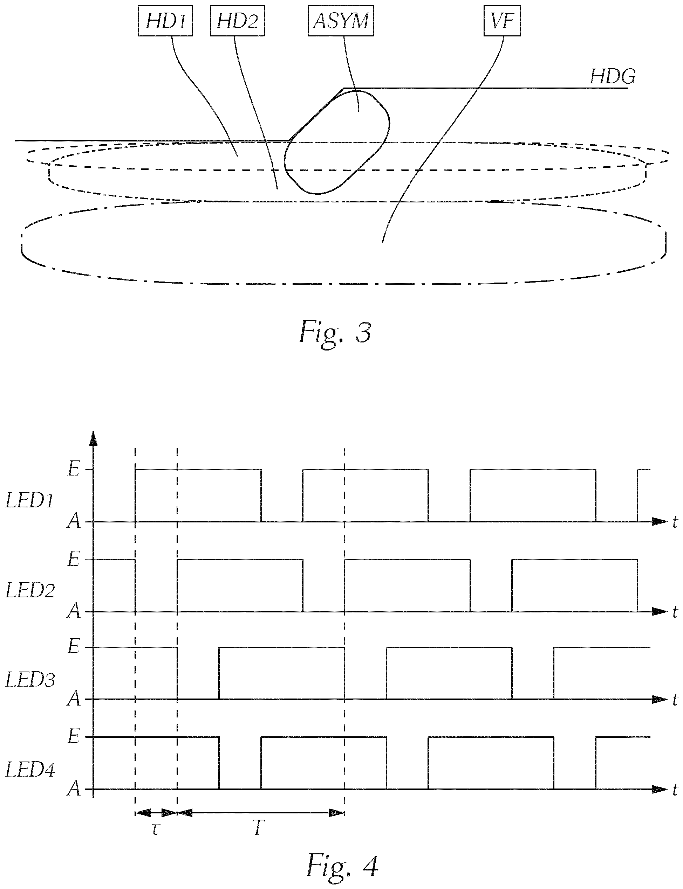

In dem Dokument US 2014/0035473 A1 geht es um Probleme, die bei der Spannungs(Strom)versorgung einer Anzahl von LEDs aus einer gleichgerichten Wechselspannung mit hoher Restwelligkeit auftreten. Um sämtliche LEDs gleichmäßig zu belasten, werden unter Zuhilfenahme von Schieberegistern immer andere LEDs zu jeweiligen Spannungsschwellen geschaltet, wobei synchronisiert mit der Netzspannung geschaltet wird. Dies ist in Fig. 3A, B, C des Dokuments illustriert. Würde dieses Verfahren bei Versorgung aus einer Gleichspannungswelle angewendet werden, käme es im Falle einer vorübergehenden Spannungsverminderung zwar zu einem Ausschalten von LEDs, nicht jedoch zu einem zyklischen AUS/EIN-Schalten und ein homogener Eindruck der gesamten Lichtquelle wäre nicht gegeben.

Es ist eine Aufgabe der Erfindung, ein Verfahren sowie eine Schaltungsanordnung zum Speisen einer Serienschaltung von n LED-Einheiten zu schaffen, bei welcher Schwankungen der Betriebsspannung in einer Weise ausgeglichen werden, welche das Erscheinungsbild der gesamten LED-Anordnung möglichst wenig beeinträchtigt, auch wenn starke Spannungsschwankungen auftreten.

Diese Aufgabe wird mit einem Verfahren der eingangs genannten Art gelöst, bei welchem erfindungsgemäß zumindest in Abhängigkeit von der Höhe der Betriebsspannung bei einem Tastgrad jeder LED-Einheit von (n-k)/n getaktet und zyklisch durchlaufend ständig wechselnd jeweils k LED-Einheiten der Serienschaltung kurzgeschlossen werden, wobei gleichzeitig (n-k) LED-Einheiten stromdurchflossen bleiben, wogegen bei nominaler Betriebsspannung und normalen Betriebszustand k = 0 gewählt und die Serienschaltung mit konstantem Strom gespeist wird.

Eine vorteilhafte Ausführung der Erfindung zeichnet sich dadurch aus, dass die Auswahl der LED-Einheit/Einheiten, welche kurzgeschlossen werden, unter Zugriff auf eine abgespeicherte Merkfunktion erfolgt oder von einem Zufallsgenerator gesteuert wird.

Bei einer sehr zweckmäßigen Variante wird im Falle des Kurzschließens von LED-Einheiten die Stromquelle zur Änderung auf einen höheren/niedrigeren Wert des konstanten Stroms angesteuert.

Dabei kann vorgesehen sein, dass bei einem Absinken der Betriebsspannung der Strom durch die Serienschaltung erhöht und/oder zumindest eine der LED-Einheiten zyklisch durchlaufend ständig wechselnd kurzgeschlossen wird.

Bei einer sinnvollen Variante ist vorgesehen, dass als Maß für die Betriebsspannung die Größe des Stromes durch die Serienschaltung herangezogen wird.

Zum Schutz der verwendeten LEDs ist es zweckmäßig, wenn die Stromerhöhung in Abhängigkeit von einer für die LED-Einheiten signifikanten Temperatur erfolgt.

Bei einer praxisgerechten Ausführung wird die Dauer eines Taktes zwischen 1µs und 50 ms und vorzugsweise mit 5 ms gewählt.

Ebenso wird die Aufgabe mit einer Schaltungsanordnung der oben angegebenen Art gelöst, bei welcher nach der Erfindung die Schalteranordnung aus n, je die LED-Einheiten überbrückenden gesteuerten Schaltern besteht, die Steuereinheit zum Vergleich der Betriebsspannung mit vorgebbaren Schwellenwerten eingerichtet ist und dazu, in Abhängigkeit von diesem Vergleich bei einem Tastgrad jeder LED-Einheit von (n-k)/n getaktet und zyklisch durchlaufend ständig wechselnd jeweils k LED-Einheiten der Serienschaltung über die zugeordneten Schalter kurzzuschließen, wobei gleichzeitig (n-k) LED-Einheiten stromdurchflossen bleiben.

In der Praxis ist es günstig, falls die Dauer eines Taktes zwischen 1 und 50 ms liegt und vorzugsweise 5 ms beträgt.

Es ist besonders zweckmäßig, falls der Steuereinheit eine Speichereinheit zum Abspeichern von Informationen über Maximalströme, jeweilige Istwerte von Spannungen und Strömen und Gewichtungen zur Priorität bestimmter LED-Einheiten zugeordnet ist.

Auch kann es günstig sein, wenn der Steuereinheit ein Zufallsgenerator zugeordnet ist.

Eine zweckmäßige Weiterbildung der Erfindung zeichnet sich dadurch aus, dass die Steuereinheit dazu eingerichtet ist, bei einem Absinken der Betriebsspannung den Strom durch die Serienschaltung zu erhöhen und/oder zumindest eine der LED-Einheiten zyklisch durchlaufend ständig wechselnd kurzzuschließen.

Die Erfindung samt weiteren Vorteilen ist im Folgenden an Hand beispielsweiser Ausführungsformen näher erläutert, die in der Zeichnung veranschaulicht sind. In dieser zeigen
Fig. 1 ein Blockschaltbild einer erfindungsgemäßen Schaltungsanordnung,
Fig. 2 den Teil eines Blockschaltbildes wie Fig. 1, jedoch für eine Variante bezüglich der Ansteuerung der LEDs,
Fig. 3 eine beispielsweise Lichtverteilung einer LED-Scheinwerfereinheit,
Fig. 4 ein Diagramm betreffend den zeitlichen Ablauf der Ansteuerung von vier LEDs nach einer ersten Variante eines Verfahren gemäß der Erfindung,
Fig. 5 ein Diagramm betreffend den zeitlichen Ablauf der Ansteuerung von fünf LEDs nach einer zweiten Variante des Verfahren gemäß der Erfindung,
Fig. 6 ein Ablaufdiagramm zu einer Ausführung eines Verfahrens gemäß der Erfindung und
Fig. 7 in vier Diagrammen den zeitlichen Ablauf der Ansteuerung von vier LEDs bei gleichzeitiger Ausregelung von Helligkeitsschwankungen über den Strom.

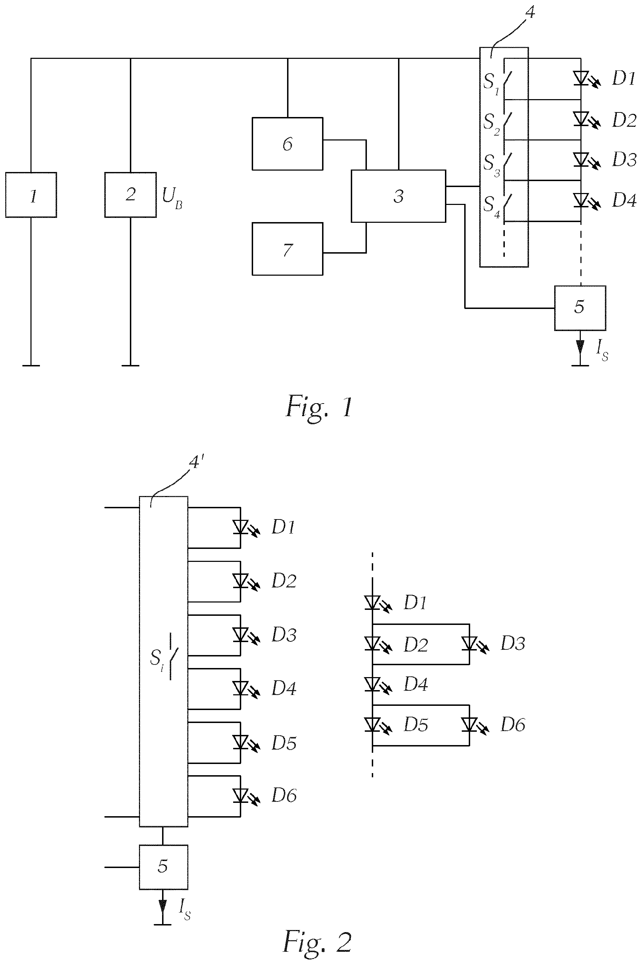

Fig. 1 zeigt ein Blockschaltbild einer ersten Ausführungsform einer Schaltungsanordnung nach der Erfindung am Beispiel der Ansteuerung von vier Leuchtdioden, im Folgenden LEDs genannt. Bei diesem Beispiel wird in einem Kraftfahrzeug mit Hilfe eines nicht näher dargestellten Energiemanagmentsystems 1, das vor allem einen Generator und einen Laderegler enthält, eine Fahrzeugbatterie 2 nach Möglichkeit in einem geladenen Zustand mit einer Sollspannung von z.B. 12 Volt gehalten. Die tatsächliche Batteriespannung ist mit U_{B} bezeichnet, sie beträgt während des Fahrbetriebes meist 13,5 bis 15 Volt.

Mit dieser Spannung U_{B} sollen nun vier in Serie geschaltete LED-Einheiten LED1, LED2, LED3 und LED4 gespeist werden, die im einfachsten Fall aus einzelnen LEDs bestehen und zur Vereinfachung auch so gezeichnet sind, doch soll es klar sein, dass die LED-Einheiten auch je mehrere, insbesondere auf einem Chip zusammengefasste LEDs umfassen kann. Den LED-Einheiten LED1, LED2, LED3 und LED4 ist eine von einer Steuereinheit 3 angesteuerte Schalteinheit 4 zugeordnet, wobei zu Versorgung der Serienschaltung mit konstantem Strom eine gesteuerte Stromquelle 5 vorgesehen ist. Die Schalteinheit 4 bietet zumindest die Möglichkeit, jede der vier LED-Einheiten durch Schalter S₁....S₄ wahlweise und für eine bestimmte Zeitdauer kurzzuschließen. Die Schalter S₁....S₄ sind im Allgemeinen durch Schalttransistoren realisiert. Der Steuereinheit ist eine von einer Referenzspannungseinheit 6 gelieferte Referenzspannung U_{ref} zugeführt und die Steuereinheit 3 steht weiters mit einer Speichereinheit 7 in Verbindung, in welcher Informationen über Maximalströme, jeweilige Istwerte von Spannungen und Strömen, Gewichtungen bestimmter LED-Einheiten hinsichtlich deren Prioritäten, Ansteuerzeiten, Maximaltemperaturen, zuletzt angesteuerte Schalter etc. abgelegt werden können.

Bei der in Fig. 2 dargestellten Variante ist vorgesehen, dass eine Anzahl von Leuchtdioden bzw. LED-Einheiten D1 bis D6, im vorliegenden Beispiel sechs, je mit ihren beiden Anschlüssen zu einer Schaltmatrix 4' geführt sind, welche eine solche Anzahl von gesteuerten Schaltern Sᵢ besitzt, dass die LEDs D1 bis D6 im Prinzip in beliebiger Weise parallel oder in Serie geschaltet werden können. Dies entspricht soweit dem Stand der Technik, z.B. nach der eingangs genannten WO 2010/013177A1. Rechts in Fig. 2 ist beispielsweise die für einen bestimmten Betriebsfall verschaltete Serienschaltung D1 - D2//D3 - D4 -D5//D6 gezeigt. Wie weiter unten genauer erläutert wird, dient hier die Schaltmatrix 4' zur Realisierung einer Notbeleuchtungsfunktion.

Fig. 3 zeigt schematisch die Lichtverteilung eines Abblendlichtes, wobei dieses Abblendlicht von mehreren LED-Einheiten gebildet wird. Im vorliegenden Fall gibt es vier LED-Einheiten HD1, HD2, ASYM und VF, wobei von einer das Vorfeld VF gebildet wird, von zwei weiteren die horizontale Helldunkel-Grenze HD1 und HD2 gebildet wird und von der vierten LED-Einheit die Asymmetrie ASYM des Abblendlichtes. Im vorliegenden Fall werden somit die Bezeichnungen HD1, HD2, ASYM und VF sowohl für LED-Einheiten als auch für das von diesen je ausgeleuchtete Feld verwendet. Dies entspricht einem typischen, in der Praxis verwendeten LED-Abblendlichtmodul, welches als Projektionssystem mit Mehrkammerreflektor ausgebildet ist, wobei den Kammern je eine LED-Einheit zugeordnet ist und insgesamt ein Abblendlicht gebildet wird.

Dies bedeutet, dass die Anzahl der Teillichtverteilungen von der Bauart des Moduls abhängt, wobei, wie bereits erwähnt wurde, eine LED-Einheit auch aus mehreren LEDs bestehen kann, die je nach Belieben zusammen verschaltet als LED-Einheit im Sinne der Erfindung fungieren können, um so wiederum eine definierte Anzahl an Teillichtverteilungen schaffen zu können. Dabei ist zu beachten, dass das Zusammenschalten von LEDs in bestimmten Ausführungen zu einer anderen Flussspannung bzw. Gesamtspannung der LED-Einheit führt. Die Anzahl der individuell schaltbaren Teillichtverteilungen ist somit einerseits modulabhängig und andererseits verschaltungsabhängig, sie kann jedoch in einem bestimmten Bereich variiert werden.

Jedenfalls wird bei heutigen LED-Modulen das Lichtbild immer aus mehreren LED-Einheiten gebildet, die je eine Teillichtverteilung bilden, sodass einem LED-Scheinwerfer das erzeugte Lichtbild immer aus mehreren Teillichtverteilungen besteht, wovon bestimmte Teillichtverteilungen für die Sichtbarkeit gegenüber anderen Verkehrsteilnehmern wichtiger sind als andere. Dementsprechend kann eine gewisse Gewichtung/Priorisierung für die einzelnen Teillichtverteilungen vergeben werden, die im Falle einer bestimmten Unterspannung dafür sorgt, dass zumindest die Sichtbarkeit gegenüber anderen Verkehrsteilnehmern gesichert ist.

Allgemein kann man sagen, dass jener Bereich (jene Teillichtverteilung), der sich am nächsten dem HV-Punkt (der 25 cm oberhalb der Hell-Dunkel-Grenze in der Mitte des Lichtstrahls liegt, ein wichtiger Begriff der KFZ-Lichttechnik, im Lichtbild jener Punkt, an dem sich die Horizontale und Vertikale schneiden, also der 0° / 0° Punkt) befindet, in bevorzugter Weise sogar einige Grade über der horizontalen O°-Linie, am höchsten priorisiert/gewichtet werden muss, da dieser Bereich dem Bereich entspricht, in dem sich andere Verkehrsteilnehmer am ehesten befinden bzw. in diesem Bereich die größte Gefahr besteht, andere Verkehrsteilnehmer anzutreffen. Je nach Situation kann es auch von Vorteil sein, genau jene Bereiche höher zu priorisieren, welche aus Sicht des Fahrers wichtig erscheinen, die somit nicht für die Sichtbarkeit gegenüber anderen Verkehrsteilnehmer dienen sondern mehr für die Ausleuchtung bestimmter Bereiche für den Fahrer selbst als wichtig erscheinen. Beispielsweise kann auch eine Gewichtung hinsichtlich des Komforts stattfinden, nämlich derart, dass jene Bereiche niedriger gewichtet werden, bei denen der Fahrer nicht sofort bemerkt, dass diese dunkler erscheinen.

Alternativ kann diese Funktion mit GPS, Lenkradsensor, Neigungssensor usw. zusammenarbeiten, um den Bereich der Priorisierung je nach Straßenlage zu adaptieren; beispielsweise um in einer Kurvenfahrt jene LED-Einheit zu priorisieren, welche dazu eingerichtet ist, in Richtung der Kurve zu leuchten oder zumindest in die Breite zu leuchten, da in einer solchen Situation die Priorisierung der Teillichtverteilung in der Nähe des HV-Punktes nicht die beste Wahl wäre. Mit anderen Worten erfolgt hier die Gewichtung unter Berücksichtigung der aktuellen Fahrsituation.

Im normalen Betriebszustand, bei einer nominalen Betriebsspannung U_{B}, z.B. 12 Volt, werden alle vier LEDs in Serie geschaltet (vgl. Fig. 1) von dieser Spannung gespeist. In der Steuereinheit 3 wird die augenblickliche Betriebsspannung U_{B} ständig mit der Referenzspannung U_{ref} verglichen und an Hand der im Speicher abgespeicherten Werte wird eine Entscheidung getroffen, ob ein Eingreifen wegen einer Unterspannung erfolgen soll. Bei einem solchen Eingreifen können LED-Einheiten entsprechend dem erfindungsgemäßen Verfahren periodisch kurzgeschlossen werden bzw. es kann eine Änderung des Stroms Is durch die Serienschaltung durch Abgabe eines entsprechendes Signals der Steuereinheit 3 an die gesteuerte Stromquelle 5 in die Wege geleitet werden.

Unter Bezugnahme auf Fig. 4 in Verbindung mit Fig. 1 soll nun das erfindungsgemäße Verfahren, das mittels einer Schaltungsanordnung nach der Erfindung verwirklicht werden kann, erläutert werden. In dem gezeigten Diagramm sind nun übereinander die zeitabhängigen Schaltzustände von vier LEDs LED1, LED2, LED3, LED4 dargestellt, und zwar für den Betriebsfall, dass die Betriebsspannung U_{B} auf einen solchen Wert abgesunken ist, dass vorübergehend immer eine der vier LEDs ausgeschaltet, nämlich durch einen der Schalter S₁....S₄ (Fig. 1) kurzgeschlossen wird. Die Buchstaben E bzw. A auf der Ordinatenachse bedeuten dabei für die jeweiligen LEDs "Ein" bzw. "Aus".

Man erkennt in Fig.4, dass zyklisch durchlaufend jeweils eine der vier LEDs der Serienschaltung kurzgeschlossen wird, wobei gleichzeitig drei LEDs stromdurchflossen bleiben. Das Kurzschließen erfolgt für eine solche Dauer oder Taktlänge τ, dass für das menschliche Auge kein unangenehmes Flackern erkennbar ist. In der Praxis kann beispielsweise eine Taktdauer τ = 20 ms gewählt werden, doch können im Allgemeinen Taktlängen von 1 µs bis 50 ms sinnvoll sein. Weiters erkennt man in Fig. 4, dass der gesamte Schaltvorgang zyklisch mit einer Periodendauer T = 4τ abläuft.

Die Darstellung nach Fig. 4 macht auch klar, dass zu jedem Zeitpunkt drei der vier LEDs eingeschaltet sind und eine LED ausgeschaltet (kurzgeschlossen) ist. Die geringere Betriebsspannung erlaubt nur das Betreiben von drei LEDs an Stelle von vier LEDs (im normalen Betriebsfall), wobei nicht, wie nach dem Stand der Technik, eine der LEDs ständig dunkel bleibt.

Bereits an dieser Stelle soll erwähnt werden, dass bei entsprechender Schaltungsdimensionierung der durch den - periodischen - Ausfall einer LED bedingte Helligkeitsabfall durch eine Erhöhung des Stroms durch die Serienschaltung zumindest teilweise kompensiert werden kann.

Weiters möge erwähnt werden, dass man oft darnach trachten wird, die Ein- und Ausschaltflanken nicht zu steil zu machen, sondern über die technisch mögliche Flankensteilheit hinaus flacher zu gestalten, um Flackereffekte und/oder EMVtechnische Nachteile zu vermeiden.

In Zusammenhang mit Fig. 4 wurde ein einfacher Spezialfall behandelt, der zunächst das Verständnis der Erfindung erleichtern soll. Der allgemeine Fall ist jedoch jener, dass die Serienschaltung n LED-Einheiten aufweist, von welchen in Abhängigkeit von der Höhe der Betriebsspannung jeweils k LED-Einheiten kurzgeschlossen werden, wobei gleichzeitig (n-k) LED-Einheiten stromdurchflossen bleiben. Im Falle der Fig. 4 war somit n = 4 und k= 1.

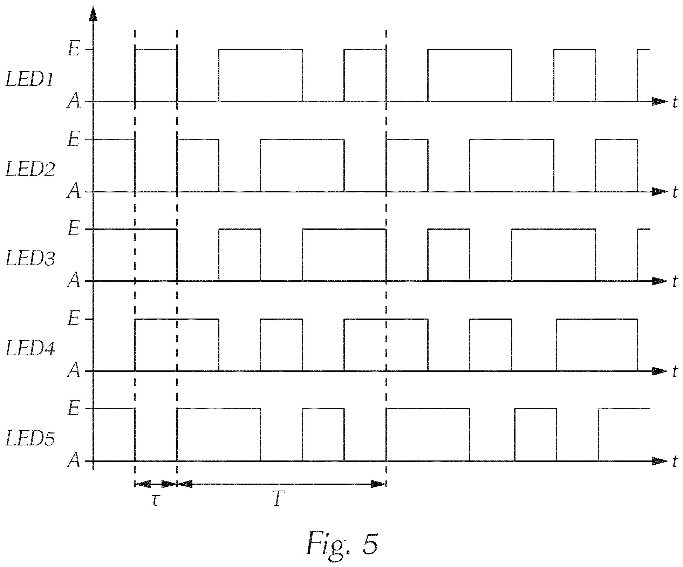

Ausgehend von dieser Überlegung sei nun Fig. 5 betrachtet, welche sich auf eine Serienschaltung von fünf LED-Einheiten LED1, LED2, LED3, LED4 und LED5 bezieht und von der Annahme ausgegangen wird, dass die Speisespannung U_{B} soweit abgesunken ist, dass immer zwei der fünf LEDs kurzgeschlossen werden, um einen ordnungsgemäßen Betrieb der entsprechenden Beleuchtungseinrichtung sicherzustellen. Auch hier ist die Taktlänge τ eingezeichnet, jedoch beträgt die Periodendauer entsprechend der Anzahl fünf der LED-Einheiten T = 5τ. Analog zu dem an Hand der Fig. 4 erläuterten Fall sind zu jedem Zeitpunkt drei der fünf LEDs eingeschaltet und zwei LEDs ausgeschaltet (kurzgeschlossen). Die geringere Betriebsspannung reicht hier nur für drei an Stelle von fünf LEDs (im normalen Betriebsfall) aus, wobei nicht, wie nach dem Stand der Technik, eine oder sogar mehrere der LEDs ständig dunkel bleiben. Natürlich kann im Falle der Serienschaltung von fünf LED-Einheiten bei nur wenig abgefallener Betriebsspannung U_{B} auch nur eine LED periodisch abgeschaltet werden.

An dieser Stelle soll angemerkt werden, dass die Anzahl der verwendeten LEDs bzw. LED-Einheiten auch in einem Zusammenhang mit deren Flussspannung und der zur Verfügung stehenden Betriebsspannung, bei Kraftfahrzeugen die Bordspannung, die auch 24 Volt oder mehr betragen kann.

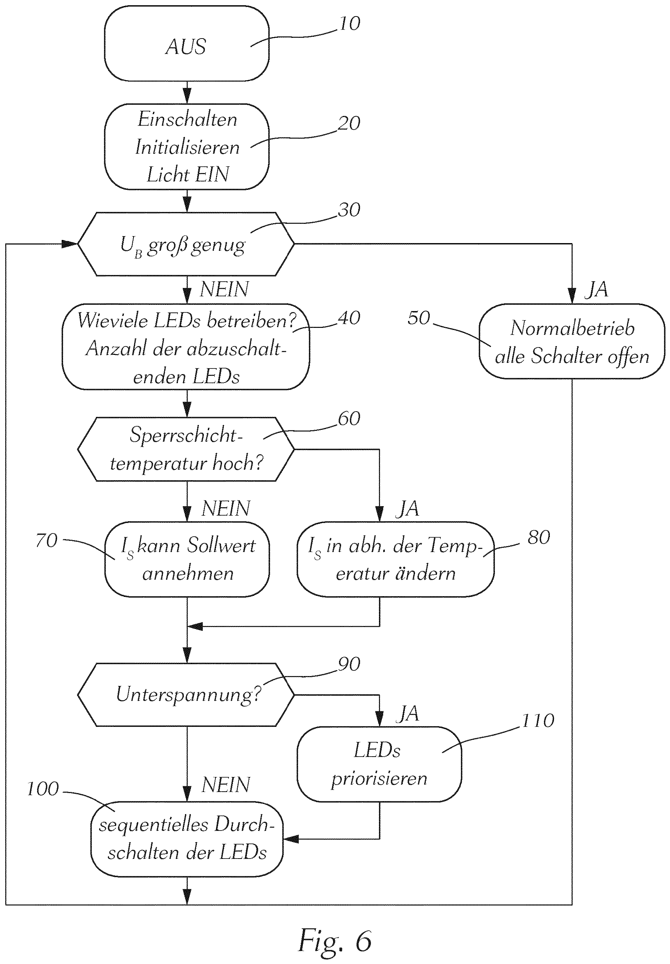

Fig. 6 zeigt ein das erfindungsgemäße Verfahren betreffendes beispielsweises Ablaufdiagramm, das, soweit es nicht selbsterklärend ist, hier ergänzend erläutert sei:
Beginnend von dem ausgeschalteten Zustand in Schritt 10, erfolgt im Schritt 20 das Einschalten mit dem Initialisieren der Steuereinheit 3 in Verbindung mit dem Speicher 7. In Schritt 30 wird mittels der Referenzspannung oder einem Soll-Ist-Vergleich des Stroms durch die Serienschaltung überprüft, ob die Betriebsspannung U_{B} groß genug ist. Falls dies nicht der Fall ist, erfolgt der Schritt 40 zum Überprüfen, wie viele LED-Einheiten abgeschaltet werden müssen. Die entsprechende Anzahl k ergibt sich zu k = n - (U_{B}/U_{LED}, abgerundet).

Analog zu dieser Anzahl ergibt sich eine bestimmte Einschaltdauer jeder LED-Einheit in der entsprechenden Periode. Vergleichbar mit einer Pulsweitenmodulation ergibt sich also ein Tastgrad für jede LED-Einheit von (n-k)/n. Im Beispiel von vier LEDs: bei k=1 ergeben sich 75% vgl. Fig. 3, bei k=2 ergeben sich 50%, usw.

Falls in Schritt 30 festgestellt wurde, dass U_{B} groß genug ist bzw. der Iststrom dem Sollwert des Stroms entspricht (siehe Erläuterung im nächsten Absatz), liegt gemäß Schritt 50 der Normalbetrieb vor, alle Schalter, z.B. S₁ bis S₄ in Fig. 1, sind geöffnet und der Betrieb der LED-Einheiten erfolgt kontinuierlich, d.h. nicht gepulst. Mit Vorteil kann auch ein Ablauf vorgesehen sein, bei dem die Anzahl der zu betreibenden LEDs schrittweise erhöht wird.

Die Steuerung über Schwellwerte der Spannung ist möglich, kann aber in der Praxis Nachteile zeigen, da die Flussspannung von LEDs stark schwankt (produktionsbedingt) und abhängig von Strom und Temperatur ist. Eine zweckmäßige Regelung sieht vor, die LEDs zu überbrücken wenn der Strom sinkt. Die Stromquelle versucht den Strom konstant zu halten, schafft sie dies nicht, z.B. wegen Unterspannung, sinkt der Strom. Durch eine Strommessung, beispielsweise über einen Messwiderstand kann eine Abweichung des Istwertes von einem Sollwert (welcher im Speicher abgelegt ist) durchgeführt werden. Bei einer definierten Abweichung z.B. um -5% (auf 95%) soll zunächst eine LED kurzgeschlossen werden. Kann der Sollstrom erreicht werden, wird alternierend eine LED kurzgeschlossen. Ist dies nicht der Fall muss eine weitere LED kurzgeschlossen werden, usw.

Um über die Strommessung dann wieder in den Normalbetrieb wechseln zu können bzw. mit der Methode der Strommessung zu kontrollieren, ob es die Betriebsspannung überhaupt erlaubt, wieder in den Normalbetrieb wechseln zu können, kann man alle LEDs kurzzeitig betreiben (beispielsweise in einem 10µs Bereich, damit dieses Umschalten für das Auge nicht wahrnehmbar ist). In dieser Zeit wird der Strom gemessen. Entspricht der gemessene Strom dem Sollstrom, nämlich jenem Strom der im Normalbetrieb fließen sollte, und dessen Wert im Speicher 7 abgelegt ist, kann in den Normalbetrieb (alles Schalter offen) übergegangen werden.

In Schritt 60, 70, 80 (optional) wird überprüft, inwieweit der Strom erhöht werden kann. LEDs können je nach Typ mit bis zu doppeltem oder gar dreifach höherem Strom betrieben werden, dies jedoch nur für eine kurze Zeitdauer (10 - 100 ms), da sich sonst deren Temperatur drastisch erhöhen würde. Die Pulsdauer ist von der Stromhöhe und der Temperatur abhängig und wird von den LED-Herstellern spezifiziert. Um jedoch Helligkeitsschwankungen aufgrund der verringerten Anzahl an leuchtenden LED-Einheiten auszugleichen, kann temperaturabhängig der Strom bis zu einem gewissen Wert erhöht werden.

Mit anderen Worten darf je nach Typ und Verwendung der LED-Einheit eine maximale Sperrschichttemperatur nicht überschritten werden (über Messung der Kontakttemperatur und der Umgebungstemperatur und/oder der Leistungsaufnahme kann über Herstellerangaben des thermischen Widerstands zwischen Sperrschicht und Kontaktstelle die Sperrschichttemperatur der LED oder der mehreren LEDs der LED-Einheit errechnet werden). Allgemein wird man hier eine Temperatur messen, die für die (Sperrschicht)Temperatur der LEDs signifikant ist, gegebenenfalls kann auch die Umgebungstemperatur erfasst werden.

Liegt die Sperrschichttemperatur unter einem bestimmten Wert, kann Is entsprechend erhöht werden, um einer Verringerung der Gesamthelligkeit des LED-Einheiten-Strangs aufgrund eines getakteten nacheinander folgenden Kurzschließens, zu verhindern. Dementsprechend wird Is auf das n/ (n-k) fache eingestellt. Muss beispielsweise aufgrund einer Betriebsspannungsverringerung auf 10 Volt eine LED-Einheit ausgeschaltet werden, so ergibt sich: 4/(4-1) = 1,333 und Is kann auf 133% erhöht werden. Wobei anzumerken ist, dass eine LED bei zunehmenden Strom an Wirkungsgrad verliert, sich mit anderen Worten nicht linear verhält. Folglich müsste man den Strom entsprechend den Herstellerangaben auf einen höheren Wert setzen, um eine entsprechende Lichtsteigerung zu erreichen. Beispielsweise müsste bei einer gewünschten Lichtsteigerung von 33% der Strom um ca. 40% erhöht werden.

Vorzugsweise kann die Änderung des Stromes zeitkontinuierlich erfolgen, damit ergeben sich Vorteile sowohl bei der technischen Dimensionierung der Stromquelle 5 als auch im EMV-Verhalten.

Liegt die Sperrschichttemperatur über einem bestimmten Wert, kann Is zwar erhöht werden, jedoch nur auf einen bestimmten Maximalwert, bei dem sichergestellt ist, dass eine Erhöhung diesen Maximalwert zu keinem Schaden der LED-Einheiten führt. Natürlich können mehrere Schwellwerte verwendet werden, um ein möglichst kontinuierliches Kompensieren von Helligkeitsschwankungen zu erreichen.

In Schritt 90 (optional) wird überprüft, inwieweit eine drastische Unterspannung vorliegt, wobei der entsprechende Vergleichswert je nach System frei wählbar ist. Beispielsweise könnte man eine Unterspannung als Spannung unter 7 Volt definieren. Dementsprechend würde bei einem Absinken der Betriebsspannung auf beispielsweise 6 Volt Schritt 110 folgen. Demnach würde eine bestimmte, im Speicher 7 festgelegte Priorisierung stattfinden. So wie vorhergehend erklärt, kann damit eine Art Notlichtfunktion realisiert werden.

Hingegen erfolgt bei einer Betriebsspannung im vorliegenden Beispiel von über 7 Volt das beschriebene zyklische Durchschalten der LED-Einheiten.

Je nach Auslegung des Schwellwertes für eine Unterspannung ist es natürlich auch möglich, im Beispiel von vier LED-Einheiten nur drei LED-Einheiten, nämlich jene drei mit der höchsten Gewichtungen/Priorisierungen getaktet durchzuschalten. Dies ermöglicht einen äußerst variablen Einsatzbereich.

In Schritt 100 erfolgt das nacheinander erfolgende Durchschalten der LED-Einheiten, wobei unter Zugriff auf den Speicher eine Merkfunktion verwendet wird, um ein ständiges Abschalten derselben LED-Einheit zu vermeiden. Zur zusätzlichen Erläuterung sei auf die Diagramme der Fig. 4 und 5 verwiesen.

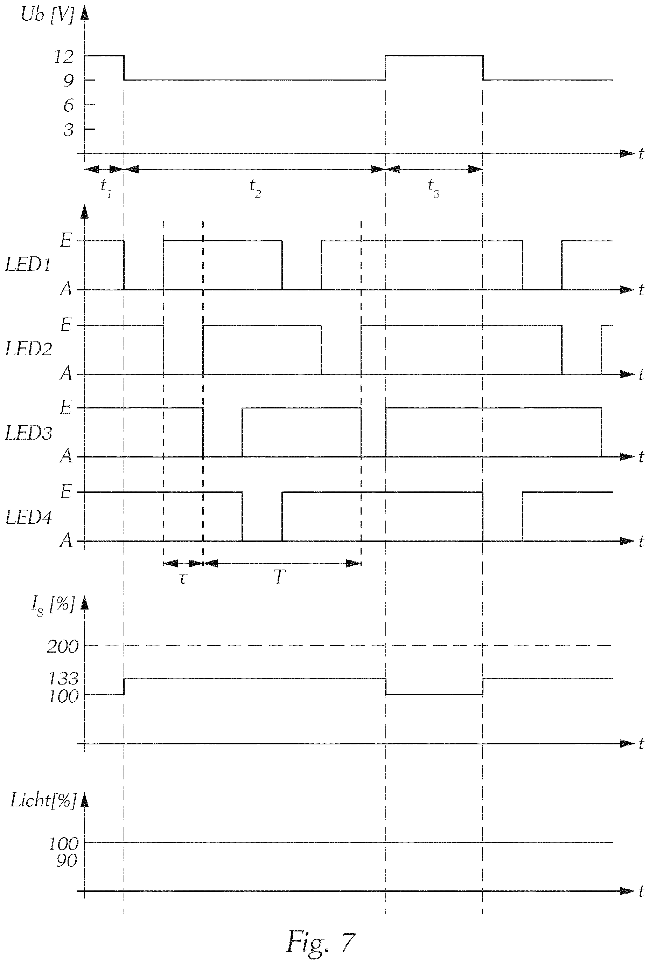

Die Merkfunktion dient unter anderem auch dazu, ein systembedingtes Zurücksetzen des aufeinanderfolgenden Kurzschließens der einzelnen LED-Einheiten nach einem "Normalbetrieb" zu verhindern, so wie es in Fig. 7 gezeigt wird. Alternativ könnte anstatt einer Merkfunktion ein Zufallsgenerator verwendet werden, um bei beispielsweise immer wiederkehrenden entsprechend gleichlange andauernden kurzen Schwankungen eine inhomogene Ausnützung oder Alterung der LED-Einheiten zu verhindern. Mit kurzen Schwankungen ist ein Spannungseinbruch gemeint, welcher dazu führt beispielsweise immer nur bis zu drei von beispielsweise vier LED-Einheiten abwechselnd kurzzuschließen. Wie bereits angemerkt, können die einzelnen LED-Einheiten in der Steuereinheit 3 bzw. der dieser allenfalls zugeordneten Speichereinheit 7 priorisiert sein. Dadurch kann man festlegen, dass ab einem bestimmten Abfall der Speisespannung U_{B} nur noch eine beschränkte, jedoch definierte Anzahl von LED-Einheiten betrieben werden soll. So kann beispielsweise ein Scheinwerfermodul mehrere Gruppen von LED-Einheiten enthalten, wobei jede Gruppe für einen Ausleuchtbereich zuständig ist. Unter Bezugnahme auf Fig. 3 kann beispielsweise bei vier Gruppen eine Zuordnung zu den Ausleuchtbereichen HD1, HD2, ASYM und VF vorgenommen werden. Um im Falle einer Unterspannung zumindest noch für ausreichende Sichtbarkeit gegenüber anderen Fahrzeugen sorgen zu können, ist mit Vorteil beispielsweise jene Gruppe, welche für die Ausleuchtung ASYM zuständig ist, am höchsten priorisiert, d.h. am stärksten gewichtet.

Eine beispielsweise Gewichtung könnte sein: ASYM - HD1 - HD2 - VF. Wird durch die Steuereinheit eine Unterspannung oder ein Absinken des Stromes festgestellt, kann dann zunächst das Vorfeld VF zurückgedimmt werden. Dazu ist weiters anzumerken, dass, geht man beispielsweise von einer nominalen Betriebsspannung U_{B} = 12 Volt aus, auch bei Absinken der Betriebsspannung auf U_{B} = 4 Volt eine LED durch Verwendung des zyklisch durchlaufenden Taktens bzw. Kurzschließens anderer LEDs und/oder durch höhere Gewichtung normal betrieben werden kann.

Im allgemeinen Fall kann nicht nur durch ein zyklisches Schalten sondern auch durch Ansteuerung der gesteuerten Stromquelle auf die Stromverteilung der einzelnen LED-Einheiten bzw. LEDs eingewirkt werden, was im Folgenden unter Bezugnahme auf Fig. 7 erläutert werden soll.

Ausgangspunkt ist eine nominale Betriebsspannung U_{B} = 12 Volt von vier LEDs oder LED-Einheiten, die gemäß dem ersten Diagramm oben in Fig. 6 nach einer Zeitspanne t₁ auf 9 Volt absinkt, nach einer Zeitspanne t₂ wieder den Nominalwert von 12 Volt erreicht und nach einer weiteren Zeitspanne t₃ wieder auf 9 Volt absinkt. Natürlich ist der dargestellte zeitliche Verlauf vereinfacht bzw. idealisiert und er soll lediglich zur Erläuterung der Erfindung dienen.

Das von oben zweite Diagramm der Fig. 7 entspricht sinngemäß jenem nach Fig. 4 und zeigt den Beginn des zyklischen Durchschaltens bzw. Kurzschließens einer LED nach Ablauf der Zeit t₁. Nach Ablauf der Zeit t₂ wird vorübergehend wieder auf den "Normalbetrieb" übergegangen, in dem alle LEDs bestromt sind und nach Ablauf der Zeit t₃ beginnt wieder das zyklische Kurzschließen einer LED.

In dem dritten Diagramm von oben der Fig. 7 ist nun der Eingriff auf die gesteuerte Stromquelle zwecks Änderung des Stroms Is gezeigt. Während der Zeit t₁ bleibt der Strom Is auf seinem Nominalwert, hier mit "100 %" bezeichnet. Um den gesamten Lichtstrom der LED-Anordnung trotz des zyklischen Ausschaltens einer LED zu erhalten oder zumindest teilweise zu kompensieren, kann nun der Strom Is vorübergehend, nämlich während der Zeitspanne t₂ erhöht werden, im vorliegenden Fall auf ca. 140% des nominalen Stroms. Nach Ablauf der Zeit t₂, d.h. der Rückkehr der Betriebsspannung U_{B} auf ihren Nominalwert, wird der Strom Is wieder auf seinen Nominalwert von 100% gestellt, um nach Ablauf der Zeit t₃ wieder auf 133% erhöht zu werden. Das Ergebnis ist in dem untersten Diagramm der Fig.6 zu sehen, welches den Lichtstrom darstellt, welcher sich trotz des zeitweisen zyklischen Abschaltens nicht ändert.

Für die Funktion der Notbeleuchtung ist zwar eine Gewichtung wesentlich, aber ein zyklisches Durchschalten (Kurzschließen) der einzelnen LED-Einheiten ist nicht zwingend erforderlich. Das Problem, wie auch aus dem Stand der Technik bekannt, liegt darin, dass eine ordnungsgemäße Beleuchtung direkt von der Betriebsspannung, bei Kraftfahrzeugen der Batteriespannung, abhängt. Wenn die Betriebsspannung Ub, beispielsweise aufgrund einer defekten Autobatterie, unter einen bestimmten Wert (definierbar) abfällt, bei dem nur noch eine oder, allgemein gesagt, weniger als die Gesamtanzahl der LED-Einheiten zu betreiben sind, liegt dieses Problem vor. Beispielsweise wäre das schon bei 10 Volt der Fall, falls die Flussspannung der LED-Einheiten (natürlich abhängig von der Verschaltung, sollte eine LED-Einheit aus mehreren LEDs bestehen) bei z.B. etwa 3Volt liegt. In diesem Fall würden nämlich etwa 12 Volt für den "Normalbetrieb" benötigt werden. Gewisse Spannungswerte, die dazu führen, dass sie sich genau im Schwellbereich zwischen Ausschalten einer LED-Einheit und nicht Ausschalten befinden können gegebenenfalls mit einem steuerbaren Widerstand beeinflusst werden. Bei der oben genannten Betriebsspannung U_{B} von 10 Volt kann eine LED-Einheit kurzgeschlossen werden, sodass sich im Beispiel nur noch eine benötigte Spannung von ca. 3 x 3 Volt = 9 Volt ergibt und die restliche Spannung von 1 Volt an einem in Serie liegenden Widerstand oder, wie im vorliegenden Beispiel, einer Stromquelle liegt.

Wesentlich ist nun, dass aufgrund der Gewichtung nicht einfach eine beliebige LED-Einheit kurzgeschlossen, sondern jene mit der niedrigsten Priorität, im vorliegenden bzw. oben genannten Beispiel wäre das jene LED-Einheit VF, welche das Vorfeld ausleuchten soll.

Wieder auf Fig. 2 zurückkommend soll erläutert werden, dass für den Fall der Notbeleuchtung diese Funktion nicht nur durch Kurzschließen einzelner LED-Einheiten realisiert werden kann, sondern auch eine prinzipielle Änderung ihrer Verschaltung. Für den Fall von vier LED-Einheiten könnte man beispielsweise zwei LED-Einheiten in Serie mit der Parallelschaltung von zwei weiteren LED-Einheiten schalten, wodurch die benötigte Spannung um ein Viertel reduziert wird, wobei sich für die parallelgeschalteten LED-Einheiten nur der halbe Strom und eine entsprechend reduzierte Lichtstärke ergeben.

Bei dem Beispiel der Fig. 2 mit sechs LED-Einheiten werden in einer bestimmten Notbeleuchtungssituation (insbesondere auf Grund einer zu geringen Betriebsspannung) in der Darstellung rechts die LED-Einheiten D1 und D4 mit vollem Strom und die LED-Einheiten D2, D3, D5 und D6 im Prinzip je mit dem halben Strom betrieben. Damit ergibt sich hier auch die Möglichkeit zu entscheiden, welche LED-Einheiten für die Sichtbarkeit gegenüber anderen Verkehrsteilnehmer wichtiger sein sollten und daher erst zu allerletzt in ihrer Lichtstärke verringert werden sollen. Demnach wären (wenn man im Beispiel der gezeigten Fig. 2, rechts bleibt) D1 und D4 höher priorisiert als D2, D3, D5 und D6.

Somit erkannt man, dass für die Notbeleuchtung die Klassifizierung der LED-Einheiten nach Ihrer Priorität erforderlich ist, um eine Einheit mit niedriger Priorität abzuschalten, d.h. kurzzuschließen. Zusätzlich kann noch ein auch periodisch durchlaufendes Kurzschließen der restlichen, nicht ständig kurzgeschlossenen LED-Einheiten erfolgen und ebenso von einer Änderung des Stromes Is durch die gesteuerte Stromquelle Gebrauch gemacht werden.

## Patentansprüche

1. Verfahren zum Speisen einer Serienschaltung von n LED-Einheiten (LED1, .... LED5) zumindest einer Leuchteinheit eines Kraftfahrzeuges und einer gesteuerten Stromquelle (5) aus einer Spannungsquelle (2) mit schwankender Betriebsspannung (U_{B}), bei welchem je nach Höhe der Betriebsspannung einzelne LED-Einheiten kurzgeschlossen werden,
**dadurch gekennzeichnet, dass**
zumindest in Abhängigkeit von der Höhe der Betriebsspannung (U_{B}) bei einem Tastgrad jeder LED-Einheit von (n-k)/n getaktet und zyklisch durchlaufend je k LED-Einheiten (LED1, .... LED5) der Serienschaltung kurzgeschlossen werden, wobei gleichzeitig (n-k) LED-Einheiten stromdurchflossen bleiben, wogegen bei nominaler Betriebsspannung (U_{B}) k = 0 gewählt und die Serienschaltung mit konstantem Strom (Is) gespeist wird.

2. Verfahren nach Anspruch 1, **dadurch gekennzeichnet, dass** die Auswahl der LED-Einheit/Einheiten, welche kurzgeschlossen werden, unter Zugriff auf eine abgespeicherte Merkfunktion erfolgt oder von einem Zufallsgenerator gesteuert wird.

3. Verfahren nach Anspruch 1 oder 2, **dadurch gekennzeichnet, dass** im Falle des Kurzschließens von LED-Einheiten (LED1... LED5) die Stromquelle (5) zur Änderung auf einen höheren/niedrigeren Wert des konstanten Stroms (Is) angesteuert wird.

4. Verfahren nach Anspruch 3, **dadurch gekennzeichnet, dass** bei einem Absinken der Betriebsspannung (U_{B}) der Strom durch die Serienschaltung erhöht und/oder zumindest eine der LED-Einheiten zyklisch durchlaufend kurzgeschlossen wird.

5. Verfahren nach einem der Ansprüche 1 bis 4, **dadurch gekennzeichnet, dass** als Maß für die Betriebsspannung die Größe des Stromes (Is) durch die Serienschaltung herangezogen wird.

6. Verfahren nach Anspruch 4 oder 5, **dadurch gekennzeichnet, dass** die Stromerhöhung in Abhängigkeit von einer für die LED-Einheiten signifikanten Temperatur erfolgt.

7. Verfahren nach einem der Ansprüche 1 bis 6, **dadurch gekennzeichnet, dass** die Dauer (τ) eines Taktes zwischen 1µs und 50 ms und vorzugsweise mit 5 ms gewählt wird.

8. Schaltungsanordnung zum Speisen einer Serienschaltung von n LED-Einheiten (LED1, .... LED5) zumindest einer Leuchteinheit eines Kraftfahrzeuges und einer gesteuerten Stromquelle (5) und mit einer Spannungsquelle (2) mit schwankender Betriebsspannung (U_{B}), wobei die Serienschaltung der LED-Einheiten und der Stromquelle an die Spannungsquelle angeschlossen ist, und mit einer Steuereinheit (3) zum Ansteuern der Stromquelle und einer den LED-Einheiten zugeordneten Schalteranordnung (4) mit gesteuerten Schaltern (S₁....S₄),
**dadurch gekennzeichnet, dass**
die Schalteranordnung aus n, je die LED-Einheiten (LED1, ...., LED4, LED5) überbrückenden gesteuerten Schaltern (S₁....S₄) besteht, die Steuereinheit (3) zum Vergleich der Betriebsspannung und/oder des Stromes (Is) durch die Serienschaltung mit vorgebbaren Schwellenwerten eingerichtet ist, und dazu, in Abhängigkeit von diesem Vergleich bei einem Tastgrad jeder LED-Einheit von (n-k)/n getaktet und zyklisch durchlaufend ständig wechselnd je k LED-Einheiten der Serienschaltung über die zugeordneten Schalter kurzzuschließen, wobei gleichzeitig (n-k) LED-Einheiten stromdurchflossen bleiben, wogegen bei nominaler Betriebsspannung (U_{B})k = 0 gewählt und die Serienschaltung mit konstantem Strom (I_{S}) gespeist wird.

9. Schaltungsanordnung nach Anspruch 8, **dadurch gekennzeichnet, dass** die Dauer eines Taktes zwischen 1 µs und 50 ms liegt und vorzugsweise 5 ms beträgt.

10. Schaltungsanordnung nach Anspruch 8 oder 9, **dadurch gekennzeichnet, dass** der Steuereinheit (3) eine Speichereinheit (7) zum Abspeichern von Informationen über Maximalströme, jeweilige Istwerte von Spannungen und Strömen, Maximaltemperaturen, zuletzt angesteuerter Schalter und Gewichtungen zur Priorität bestimmter LED-Einheiten zugeordnet ist.

11. Schaltungsanordnung nach einem der Ansprüche 9 bis 10, **dadurch gekennzeichnet, dass** der Steuereinheit ein Zufallsgenerator zugeordnet ist.

12. Schaltungsanordnung nach einem der Ansprüche 8 bis 11, **dadurch gekennzeichnet, dass** die Steuereinheit (3) dazu eingerichtet ist, bei einem Absinken der Betriebsspannung (U_{B}) den Strom durch die Serienschaltung zu erhöhen und/oder zumindest eine der LED-Einheiten zyklisch durchlaufend kurzzuschließen.

## Claims

1. A method for feeding a series circuit of n LED units (LED1, ... LED5) of at least one lighting unit of a motor vehicle and a controlled current source (5) with a fluctuating operating voltage (U_{B}) from a voltage source (2), in which individual LED units are short-circuited depending on the level of the operating voltage,
**characterized in that**,
for a duty cycle of each LED unit of (n-k)/n, a respective k LED units (LED1, ... LED5) of the series circuit are short-circuited in a clocked and cyclical manner depending on at least the level of the operating voltage (U_{B}), wherein current at the same time continues to flow through (n-k) LED units, whereas k=0 is selected at a nominal operating voltage (U_{B}) and the series circuit is fed a constant current (I_{S}).

2. The method according to claim 1, **characterized in that** the selection of an LED unit or of LED units which is/are short-circuited is conducted by accessing a stored memory function or is controlled by a random generator.

3. The method according to claim 1 or 2, **characterized in that**, in the case of short-circuiting LED units (LED1, ... LED5), the current source (5) is controlled to change to a higher/lower value of the constant current (I_{S}).

4. The method according to claim 3, **characterized in that**, in case of a drop of the operating voltage (U_{B}), the current through the series circuit is increased and/or at least one of the LED units is short-circuited cyclically.

5. The method according to any one of claims 1 to 4, **characterized in that** the level of the current (I_{S}) through the series circuit is used as a measure for the operating voltage.

6. The method according to claim 4 or 5, **characterized in that** the increase in current is conducted in dependence on a temperature significant for the LED units.

7. The method according to any one of claims 1 to 6, **characterized in that** the period (τ) of a clock cycle is selected to be between 1 µs and 50 ms, preferably 5 ms.

8. A circuit arrangement for feeding a series circuit of n LED units (LED1, ... LED5) of at least one lighting unit of a motor vehicle and a controlled current source (5) and having a voltage source (2) with fluctuating operating voltage (U_{B}), wherein the series circuit of the LED units and the current source is connected to the voltage source, and having a control unit (3) for controlling the current source and a switching arrangement (4) having controlled switches (S₁, ... S₄) which are assigned to the LED units,
**characterized in that**
the switching arrangement consists of n controlled switches (S₁, ... S₄) which respectively bridge the LED units (LED1, ..., LED4, LED5), that the control unit (3) is designed to compare the operating voltage and/or the current (I_{S}) through the series circuit with definable threshold values and is designed to short-circuit, for a duty cycle of each LED unit of (n-k)/n, a respective k LED units of the series circuit in a clocked and cyclical manner via the associated switches depending on said comparison, wherein current at the same time continues to flow through (n-k) LED units, whereas k=0 is selected at a nominal operating voltage (U_{B}) and the series circuit is fed a constant current (I_{S}).

9. The circuit arrangement according to claim 8, **characterized in that** the period of a clock cycle is between 1 µs and 50 ms, preferably 5 ms.

10. The circuit arrangement according to claim 8 or 9, **characterized in that** the control unit (3) is allocated a storage unit (7) for storing information on maximum currents, respective actual values of voltages and currents, maximum temperatures, most recently controlled switches and weighting regarding the priority of specific LED units.

11. The circuit arrangement according to any one of claims 9 to 10, **characterized in that** the control unit is allocated a random generator.

12. The circuit arrangement according to any one of claims 8 to 11, **characterized in that** the control unit (3) is set up, in case of a drop of the operating voltage (U_{B}), to increase the current through the series circuit and/or to cyclically short-circuit at least one of the LED units.

## Revendications

1. Procédé pour alimenter un circuit série de n unités à DEL (LED1, ... LED5) d'au moins une unité d'éclairage d'un véhicule automobile et d'une source de courant commandée (5) à partir d'une source de tension (2) avec une tension de fonctionnement variable (U_{B}), dans lequel, en fonction du niveau de la tension de fonctionnement, des unités à DEL individuelles sont court-circuitées,
**caractérisé en ce**
**qu'**au moins en fonction du niveau de la tension de fonctionnement (U_{B}) en cas de rapport cyclique de chaque unité à DEL de (n-k)/n, par itération cadencée et cyclique, respectivement k unités à DEL (LED1, ... LED5) du circuit série sont court-circuitées, dans lequel simultanément (n-k) unités à DEL restent parcourues par du courant, alors qu'en cas de tension de fonctionnement nominale (U_{B}), on sélectionne k=0 et le circuit série est alimenté en courant constant (I_{S}).

2. Procédé selon la revendication 1, **caractérisé en ce que** la sélection de l'unité à DEL/des unités à DEL qui sont court-circuitées est commandée par accès à une fonction de repérage enregistrée ou est commandée par un générateur de nombres aléatoires.

3. Procédé selon la revendication 1 ou 2, **caractérisé en ce qu'**en cas de court-circuitage d'unités à DEL (LED1, ... LED5), la source de courant (5) est commandée pour le changement à une valeur plus élevée/basse du courant constant (I_{S}).

4. Procédé selon la revendication 3, **caractérisé en ce qu'**en cas de baisse de la tension de fonctionnement (U_{B}), le courant à travers le circuit série est augmenté et/ou au moins l'une des unités à DEL est court-circuitée par itération cyclique.

5. Procédé selon l'une des revendications 1 à 4, **caractérisé en ce qu'**en guise de mesure pour la tension de fonctionnement, on tient compte de la puissance du courant (I_{S}) à travers le circuit série.

6. Procédé selon la revendication 4 ou 5, **caractérisé en ce que** l'augmentation du courant s'effectue en fonction d'une température significative pour les unités à DEL.

7. Procédé selon l'une des revendications 1 à 6, **caractérisé en ce que** la durée (τ) d'un cycle est sélectionnée entre 1 µs et 50 ms et de préférence de 5 ms.

8. Agencement de circuit pour alimenter un circuit série de n unités à DEL (LED1, ... LED5) d'au moins une unité d'éclairage d'un véhicule automobile et d'une source de courant commandée (5) et avec une source de tension (2) avec une tension de fonctionnement variable (U_{B}), dans lequel le circuit série des unités à DEL et de la source de courant est raccordé à la source de tension, et avec une unité de commande (3) pour commander la source de courant et un agencement de circuit (4), avec des commutateurs commandés (S₁, ... S₄), associé aux unités à DEL,
**caractérisé en ce**
**que** l'agencement de circuit se compose de n commutateurs commandés (S₁, ... S₄) assurant le pontage respectivement des unités à DEL (LED1, ..., LED4, LED5), l'unité de commande (3) est conçue pour la comparaison de la tension de fonctionnement et/ou du courant (I_{S}) à travers le circuit série avec des valeurs de seuil prescriptibles et, en fonction de cette comparaison, en cas de rapport cyclique de chaque unité à DEL de (n-k)/n, pour court-circuiter par itération cadencée et cyclique en variant constamment respectivement k unités à DEL du circuit série via les commutateurs associés, dans lequel simultanément (n-k) unités à DEL restent parcourues par du courant, alors qu'en cas de tension de fonctionnement nominale (U_{B}), on sélectionne k=0 et le circuit série est alimenté avec un courant constant (I_{S}).

9. Agencement de circuit selon la revendication 8, **caractérisé en ce que** la durée d'un cycle se situe entre 1 µs et 50 ms et est de préférence de 5 ms.

10. Agencement de circuit selon la revendication 8 ou 9, **caractérisé en ce que** l'on associe à l'unité de commande (3) une unité de stockage (7) pour stocker des informations sur des courants maximaux, des valeurs réelles respectives de tensions et courants, des températures maximales, le commutateur commandé en dernier et des pondérations pour la priorité d'unités à DEL déterminées.

11. Agencement de circuit selon l'une des revendications 9 à 10, **caractérisé en ce que** l'on associe à l'unité de commande un générateur de nombres aléatoires.

12. Agencement de circuit selon l'une des revendications 8 à 11, **caractérisé en ce que** l'unité de commande (3) est étudiée, en cas de chute de la tension de fonctionnement (U_{B}), pour augmenter le courant à travers le circuit série et/ou court-circuiter au moins l'une des unités à DEL par itération cyclique.
